# NEUE EUROPÄISCHE PATENTSCHRIFT

(11) **EP 0 467 881 B2**
(45) Veröffentlichungstag und Bekanntmachung des Hinweises auf die Entscheidung über den Einspruch: **05.08.1998**
(45) Hinweis auf die Patenterteilung: 21.09.1994
(21) Anmeldenummer: 91890157.0
(22) Anmeldetag: 17.07.1991
(51) Int. Cl.: B23K 35/00, C21D 9/04, E01B 7/12

(54) **Verfahren zur Verbindung von aus Manganhartstahlguss bestehenden Weichenteilen bzw. Manganstahlschienen mit einer Schiene aus Kohlenstoffstahl**
Process for joining cast manganese Hadfield steel switches or manganese steel rails to a carbon steel rail
Procédé pour relier des pièces moulées d'aiguillage en acier dur au manganèse, respectivement des rails en acier au manganèse à un rail en acier de carbone

(30) Priorität: 20.07.1990 AT 1534/90
(43) Veröffentlichungstag der Anmeldung: 22.01.1992
(73) Patentinhaber: VAE Aktiengesellschaft, 1010 Wien (AT)
(72) Erfinder: Blumauer, Johannes, Dipl.-Ing., A-8740 Zeltweg (AT)
(74) Vertreter: Haffner, Thomas M., Dr.

(56) Entgegenhaltungen:
- EP-A- 0 260 233
- DE-A- 2 239 304
- DE-A- 2 251 725
- DE-B- 2 706 697
- FR-A- 2 350 424
- GB-A- 2 002 668
- JP-A- 52 741
- Flinn/Trojan "Engineering Materials and Their Applications", 1975, Houghton Mifflin Company, USA, Seite 426 und 428
- Thornton, P.A., et al "Fundamentals of Engineering Materials", 1985,Prentice-Hall, New Jersey, USA, Seite 443-444
- Fontana,M.A., et al "Corrosion Engineering", 2. Auflage, 1978,McGraw-Hill inc., Seite 58-64
- Clark, D.S.et al "Physical Metallurgy for Engineers", 2. Auflage, D. van Nostrand Company, New York, USA,Seite 340-342
- "Handbook- Metals and alloys-Standard terminology and nomenclature", 1989, Standards Australian, Seite 64-73
- DeGarmo, E.P. "Materials and Processes in Manufacturing", 2. Auflage, 1965,the Macmillan Company, New York, USA, Seite 107-115
- Wegst, C.W. "Stahlschlüssel, 15. Auflage, 1989, Verlag Stahlschlüssel Wegst GmbH, Marbach, DE, Seite 410,411,420 und 515

## Beschreibung

Die Erfindung bezieht sich auf ein Verfahren zur Verbindung von aus austenitischem Manganhartstahlguß bestehenden Weichenteilen, wie z.B. Herzstücken, bzw. Mn-Stahlschienen mit einer Schiene aus Kohlenstoffstahl unter Verwendung eines Zwischenstückes aus einem kohlenstoffarmen austenitischen Stahl, bei welchem zuerst das Zwischenstück mit der Schiene bzw. Anschlußschiene durch Abbrennstumpfschweißen verschweißt wird, worauf nach Ablängen des Zwischenstückes auf eine Länge von unter 25 mm in einem zweiten Schweißvorgang das Zwischenstück mit dem aus Manganhartstahlguß bestehenden Teil bzw. der Mn-Stahlschiene durch Abbrennstumpfschweißen verschweißt und im Anschluß an den zweiten Schweißvorgang an ruhender Luft abgekühlt wird.

Ein Verfahren der eingangs genannten Art ist aus der AT-PS 350 881 bekanntgeworden. Gemäß diesem bekannten Verfahren wurde im Anschluß an eine Abbrennstumpfschweißung, mit welcher das Zwischenstück mit der Regelschiene verbunden wurde, das Zwischenstück auf eine Länge von höchstens 20 bis 25 mm, vorzugsweise 18 bis 20 mm, abgelängt, worauf eine weitere Abbrennstumpfschweißung zur Verbindung des Zwischenstückes mit dem Manganhartstahlgußherzstück vorgenommen wurde. Nach dem zweiten Schweißvorgang erfolgte eine raschere Abkühlung als nach dem ersten Schweißvorgang, wobei durch die langsamere Abkühlung eine Aufhärtung des Schienenstahles vermieden werden sollte. Das relativ kurz bemessene Zwischenstück trägt hiebei dem Umstand Rechnung, daß austenitische Stähle in der Regel weniger verschleißfest sind als das Material des Herzstückes, so daß durch die kurze Bemessung ein Eindellen der Lauffläche des Zwischenstückes vermieden werden kann. Dadurch, daß aber nun ein so kurzes Zwischenstück wünschenswert ist, wird beim zweiten Schweißvorgang auf Grund der kurzen Länge des Zwischenstückes die erste Schweißnaht zwischen der Schiene und dem Zwischenstück zwar noch nennenswert erhitzt, die Erhitzung erfolgt jedoch auf Temperaturen von etwa 700° C und ausgehend von einer derartigen Temperatur sind Versprödungen auch dann nicht mehr zu befürchten, wenn an ruhender Luft abgekühlt wird, ohne daß hierzu eine Verzögerung erforderlich wäre. Die Verwendung des Zwischenstückes dient hierbei im wesentlichen dazu, die beiden Schweißstellen in thermischer Hinsicht zu trennen, um die jeweils geforderten Abkühlungsbedingungen einhalten zu können. Eine mögliche Versprödung des Manganhartstahlgusses des Herzstückes ist aber zu einem wesentlichen Anteil auch darauf zurückzuführen, daß an der Schweißstelle durch Diffusion eine Mischzone entsteht, in welcher eine ungünstige Gefügeausbildung entstehen kann.

In der DE-PS 29 52 079 wurde bereits vorgeschlagen, die genannte Schweißverbindung zwischen Werkstücken aus austenitischem Manganstahlguß und Schienen aus Kohlenstoffstahl unter Verwendung eines Zwischenstückes aus austenitischem Material so durchzuführen, daß das Zwischenstück zunächst an den Manganhartstahl durch Abbrennstumpfschweißen angeschweißt wird, worauf das Werkstück einer Wärmebehandlung, bestehend aus einem Lösungsglühen und einem Abschrecken im Wasser, unterworfen wird, worauf die Verbindung mit dem Regelschienenstahl durch Abbrennstumpfschweißen so erfolgt, daß der Manganhartstahl gleichzeitig gekühlt wird und die Schweißverbindung mit der Regelschiene verzögert abgekühlt wird, so daß eine Umwandlung in feinstreifigen Perlit erreicht wird. Bei diesem weiteren, bereits vorgeschlagenen Verfahren wurde als besonders bevorzugt eine Nickelbasislegierung als Werkstoff für das Zwischenstück vorgeschlagen. Im Falle der Verwendung austenitischer Stähle wurden übliche Chrom-Nickel-Stähle sowie manganlegierte Chrom-Nickel-Stähle als Material für das Zwischenstück vorgeschlagen.

Die Erfindung zielt nun darauf ab, das Verfahren der eingangs genannten Art dahingehend weiterzubilden, daß die zweite Verschweißung ohne Einhaltung spezieller Abkühlparameter durchgeführt werden kann, wobei gleichzeitig eine verbesserte Dauerfestigkeit und eine homogenere Gefügeverteilung in der gesamten Schweißzone erzielt werden soll. Insbesondere der Wegfall einer Wärmebehandlung nach der zweiten Verschweißung mit dem Regelschienenstahl soll hierbei die Reproduzierbarkeit der Festigkeitseigenschaften der Schweißverbindung verbessern, wobei gleichzeitig bessere Durchbiegungswerte und bessere Dauerfestigkeitswerte erzielt werden sollen. Zur Lösung dieser Aufgabe besteht das erfindungsgemäße Verfahren im wesentlichen darin, daß ein Zwischenstück aus einem Nb und/oder Ti stabilisierten, niedriggekohlten, austenitischen Stahl, insbesondere einem Cr-Ni-Stahl, eingesetzt wird, wobei der Nb-Gehalt des Stahls für das Zwischenstück wenigstens gleich dem 10-fachen des C-Gehaltes und der Ti-Gehalt wenigstens gleich dem 5-fachen des C-Gehaltes gewählt wird und daß im Anschluß an die erste Schweißverbindung ein Diffusionsglühen bei einer Temperatur zwischen 350° C und 1000° C über eine Zeit von 2 bis 5 Stunden durchgeführt wird, worauf anschließend an ruhender Luft abgekühlt wird. Dadurch, daß ein Zwischenstück aus einem mit Niob und/oder Titan stabilisierten, niedriggekohlten, austenitischen Stahl, insbesondere einem Chrom-Nickel-Stahl, eingesetzt wird, wird der Anteil an freiem Kohlenstoff reduziert und die sich auf die mechanischen Kennwerte der Schweißverbindung negativ auswirkende Kohlenstoffdiffusion eingeschränkt. Dadurch, daß nun in der Folge an diese erste Abbrennstumpfverschweißung zwischen dem Kohlenstoffstahl einer Schiene und dem Zwischenstück eine gezielte Wärmebehandlung vorgenommen wird, wird ein Ausgleich der Konzentrationsunterschiede der völlig unterschiedlichen Legierungen des Zwischenstückes und des Schienenstahles durch Diffusion erreicht, wobei gleichzeitig nicht nur ein Konzentrationsausgleich in der Schweißzone erreicht wird, sondern auch gegebenenfalls gebildeter Martensit wieder beseitigt wird. Nach dem Ablängen des Zwischenstückes auf die erforderliche Mindestlänge für den zweiten Schweißvorgang, kann die Verbindung mit dem aus Manganhartstahlguß bestehenden Teil bzw. einer Manganstahlschiene wiederum durch Abbrennstumpfschweißen erfolgen, wobei hier nachfolgend keine besonderen Bedingungen für die Abkühlung eingehalten werden müssen. Es kann die zweite Schweißverbindung an ruhender Luft auskühlen, ohne daß es zu neuerlichen, unerwünschten Aufhärtungserscheinungen im Bereich der ersten Schweißverbindung kommt. Insgesamt ergeben sich durch eine derartige Verfahrensweise für die Gesamtschweißverbindung Durchbiegungswerte, welche bis zu doppelt so hoch sind wie die mit der bekannten Verfahrensweise erzielbaren Durchbiegungswerte, wobei gleichzeitig Dauerfestigkeitswerte von bis zu 250 N/mm² ohne weiteres erzielt werden konnten.

Die Wärmebehandlung wird über eine Zeit von 2 bis 5 Stunden durchgeführt, worauf anschließend an ruhender Luft abgekühlt wird, wodurch sichergestellt wird, daß die Gefahr einer Martensitbildung mit Sicherheit wieder beseitigt werden kann. Die Bildung von Martensit kann auch bei gezielter Verfahrensführung während der ersten Schweißung und insbesondere bei verzögerter Abkühlung nach der ersten Verschweißung nicht mit Sicherheit vermieden werden, wobei durch die gezielte Wärmebehandlung neben der Beseitigung von gegebenenfalls gebildetem Martensit das Konzentrationsprofil der chemischen Elemente im Schweißbereich weitestgehend ausgeglichen wird, wodurch sich die höheren Festigkeitswerte und Durchbiegungswerte ergeben.

In besonders vorteilhafter Weise wird das Wärmebehandlungsverfahren so durchgeführt, daß die Wärmebehandlung über eine Zeit von 3 Stunden bei etwa 850° C durchgeführt wird.

Als Material für das Zwischenstück können mit Vorteil Stähle der Qualität X10CrNiTi 18 9, X10CrNiTi 18 10, X10CrNiNb 18 9 oder X5CrNiNb 18 10 verwendet werden. Derartige Niob- bzw. Titan-stabilisierte Stähle weisen einen maximalen Kohlenstoffgehalt von 0,06 Gew.% auf, wobei Titan bzw. Niob in einer Menge zur Stabilisierung eingesetzt werden, welche im Fall von Titan mindestens dem 5-fachen Kohlenstoffgehalt und im Falle von Niob mindestens dem 10-fachen Kohlenstoffgehalt entspricht. Als besonders bevorzugt hat sich hiebei ein Zwischenstück herausgestellt, welches die nachfolgende Richtanalyse

| | |
|---|---|
| C | 0,06 max. |
| Cr | 17,5 |
| Ni | 9,5 |
| Ti > | 5 x C |
| oder | |
| Nb > | 10 x C |

Rest Eisen und übliche Eisenbegleiter aufweist.

Unter Verwendung des erfindungsgemäß vorgeschlagenen Werkstoffes für das Zwischenstück und Einhaltung der geforderten Bedingungen für die Wärmebehandlung läßt sich die Rißbildung im Bereich der Schweißverbindung bei einer Abbrennstumpfschweißung zur Gänze vermeiden, wobei die Bruchsicherheit erhöht wird und höhere Dauerfestigkeitswerte sowie bessere Durchbiegungswerte erzielt werden. Derartige Schweißverbindungen werden somit auch den hohen Beanspruchungen und Belastungen eines Hochgeschwindigkeitsschienenverkehrs gerecht.

Mit dem erfindungsgemäß vorgeschlagenen Zwischenstück wurden Weichenherzstücke aus Hartmanganstahl einer Richtanalyse C 0,95 bis 1,30, Mangan 11,5 bis 14 in gegossenem, gewalzten oder geschmiedeten Zustand sowie gewalzte Hartmanganstahlschienen analoger Richtanalyse mit austenitischen Zwischenstücken aus einem Stahl der Zusammensetzung X10CrNiNb 18 9 sowie X10CrNiTi 18 9, gleichfalls in gegossenem, bevorzugt geschmiedetem oder gewalztem Zustand verschweißt, wobei im Fall der Schienenstähle Regelschienengüten nach UIC bzw. kopfgehärtete Schienen eingesetzt wurden. Die erste Verschweißung zwischen dem Kohlenstoffstahl der Schiene und dem Zwischenstück wurde hiebei mit einem Zwischenstück einer Länge von etwa 500 mm vorgenommen, worauf nach der ersten Abbrennstumpfschweißung das Zwischenstück, welches bereits mit der Regelschiene verbunden wurde, auf eine Länge von 8 bis 20 mm abgelängt wurde, um sicherzustellen, daß nach der zweiten Verschweißung des Zwischenstückes mit dem Manganhartstahlgußstück bzw. der Manganstahlschiene eine wirksame Länge des Zwischenstückes von etwa 5 mm verbleibt. Bedingt durch die Stabilisierung des Austenits durch Niob und/ oder Titan, wird während der ersten Schweißverbindung, welche bei gegenüber der nachfolgenden Wärmebehandlung wesentlich höheren Temperaturen erfolgt, die Kohlenstoffdiffusion wirksam beschränkt. Ein Vergleich zwischen Schweißverbindungen, wie sie entsprechend der AT-PS 350 881 und der erfindungsgemäßen Verfahrensführung erzielbar sind, hat ergeben, daß eine wesentliche Erhöhung der Durchbiegungswerte durch Anwendung der erfindungsgemäßen Verfahrensweise von bisher maximal 18 auf 35 mm erzielbar war. Die Dauerfestigkeitswerte konnten von 200 N/mm² auf 250 N/mm² gesteigert werden. Gleichzeitig konnte mit geringerem Wärmeeinbringen gearbeitet werden, wodurch die Rißbildung wesentlich herabgesetzt werden konnte. Das bisher übliche Nachwärmen der Schweißung in der Schweißmaschine durch Stromimpulse konnte bei Anwendung des erfindungsgemäßen Verfahrens unter Verwendung des mit Niob bzw. Titan stabilisierten Zwischenstückes entfallen, wodurch sich auch eine erhöhte Wirtschaftlichkeit ergibt. Nach der zweiten Schweißverbindung konnte auf Grund der vorgesehenen Wärmebehandlung eine wesentlich raschere Abkühlung des Schweißbereiches erfolgen, wobei insbesondere das bisher übliche Nachwärmspiel entfallen konnte. Insgesamt ergeben sich durch die erfindungsgemäße Verfahrensführung kürzere Schweißzeiten und eine längere Lebensdauer der Schweißverbindung.

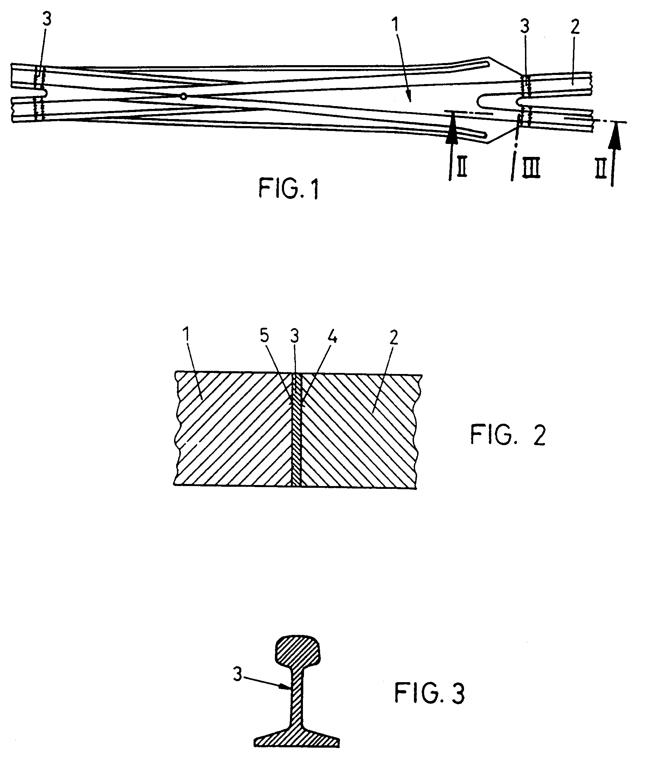

Die Erfindung wird nachfolgend an Hand eines in der Zeichnung schematisch dargestellten Ausführungsbeispieles näher veranschaulicht. In dieser zeigen Fig.1 ein Herzstück einer Kreuzung mit den angeschlossenen Regelschienen aus Kohlenstoffstahl der Güte UIC 860; Fig.2 im größeren Maßstab einen Schnitt nach Linie II-II der Fig.1; und Fig.3 einen Schnitt nach Linie III-III der Fig.1.

Das Herzstück 1 besteht aus Manganhartstahlguß. An dieses Herzstück sind die Regelschienen 2 unter Zwischenschaltung von Zwischenstücken 3 durch Abbrennstumpfschweißung angeschweißt.

Zwischenstücke einer Länge von etwa 500 mm wurden in einer 20 Abbrennstumpfschweißmaschine eingespannt. Die Zwischenstücke weisen das in Fig.3 dargestellte Profil einer Regelschiene auf. Diese 500 mm lange Zwischenstücke werden zunächst mit der Regelschiene 2 durch Abbrennstumpfschweißung verschweißt, wobei die in Fig.2 dargestellte Schweißnaht 4 entsteht. Der Bereich dieser Schweißnaht 4 wird in der Folge der oben beschriebenen Wärmebehandlung unterworfen, um eine Martensitbildung zu eliminieren. Hierauf werden die Zwischenstücke derart abgelängt, daß ihre Länge von der Schweißnaht 4 an gemessen etwa 15 mm beträgt, worauf die zweite Verschweißung gleichfalls durch Abbrennstumpfschweißung mit dem Herzstück 1 erfolgt. Bei der Verschweißung brennt wiederum eine Länge von 5 bis 10 mm vom Zwischenstück ab, so daß das verbleibende Zwischenstück eine Mindestlänge von 5 mm zwischen der Schweißnaht 4 und der Schweißnaht 5 verbleibt, wobei das Manganherzstück 1 über die Schweißnaht 5 mit dem Zwischenstück verbunden ist.

## Patentansprüche

1. Verfahren zur Verbindung von aus austenitischem Manganhartstahlguß bestehenden Weichenteilen (1), wie z.B. Herzstücken, bzw. Mn-Stahlschienen mit einer Schiene (2) aus Kohlenstoffstahl unter Verwendung eines Zwischenstückes (3) aus einem kohlenstoffarmen austenitischen Stahl, bei welchem zuerst das Zwischenstück (3) mit der Schiene (2) bzw. Anschlußschiene durch Abbrennstumpfschweißen verschweißt wird, worauf nach Ablängen des Zwischenstückes (3) auf eine Länge von unter 25 mm in einem zweiten Schweißvorgang das Zwischenstück (3) mit dem aus Manganhartstahlguß bestehenden Teil bzw. der Mn-Stahlschiene (1) durch Abbrennstumpfschweißen verschweißt und im Anschluß an den zweiten Schweißvorgang an ruhender Luft abgekühlt wird, dadurch gekennzeichnet, daß ein Zwischenstück (3) aus einem Nb und/oder Ti stabilisierten, niedriggekohlten, austenitischen Stahl, insbesondere einem Cr-Ni-Stahl, eingesetzt wird, wobei der Nb-Gehalt des Stahls für das Zwischenstück (3) wenigstens gleich dem 10-fachen des C-Gehaltes und der Ti-Gehalt wenigstens gleich dem 5-fachen des C-Gehaltes gewählt wird und daß im Anschluß an die erste Schweißverbindung ein Diffusionsglühen bei einer Temperatur zwischen 350° C und 1000° C über eine Zeit von 2 bis 5 Stunden durchgeführt wird, worauf anschließend an ruhender Luft abgekühlt wird.

2. Verfahren nach Anspruch 1, dadurch gekennzeichnet, daß die Wärmebehandlung über eine Zeit von 3 Stunden bei etwa 850° C durchgeführt wird.

3. Verfahren nach Anspruch 1 oder 2, dadurch gekennzeichnet, daß als Material für das Zwischenstück (3) ein Stahl der Qualität X10CrNiTi 18 9, X10CrNiNb 18 9, X10CrNiTi 18 10 oder X5CrNiNb 18 10 verwendet wird.

4. Verfahren nach Anspruch 1, 2 oder 3, dadurch gekennzeichnet, daß der Stahl für das Material des Zwischenstückes (3) eine Richtanalyse
| | |
|---|---|
| C | 0,06 max. |
| Cr | 17,5 |
| Ni | 9,5 |
| Ti > | 5 x C |
| oder Nb > | 10 x C |
Rest Eisen und übliche Eisenbegleiter aufweist.

## Claims

1. A method of joining switch parts (1) comprised of austenitic high manganese steel casting such as, e.g., crossings or Mn steel rails with a rail (2) of carbon steel using a connecting piece (3) made of low-carbon austenitic steel, in which firstly the connecting piece (3) is welded to the rail (2) or junction rail by flash-butt welding, whereupon, after cutting of the connecting piece (3) to a length of less than 25 mm, the connecting piece (3) in a second welding operation is welded to the part comprised of austenitic high manganese steel casting or the Mn steel rail (1) by flash-butt welding and, after the second welding operation, is cooled under static air, characterized in that a connecting piece (3) made of an Nb- and/or Ti-stabilized low-carbon austenitic steel and, in particular, a Cr-Ni steel is used, the Nb content of the steel of the connecting piece (3) being chosen to be at least equal to ten times the C content and the Ti content being chosen to be at least equal to five times the C content, and that, following the first weld joint, diffusion annealing is carried out at a temperature of between 350°C and 1000°C over a period of 2 to 5 hours, whereupon cooling is effected under static air.

2. A method according to claim 1, characterized in that the heat treatment is carried out over a period of 3 hours at approximately 850°C.

3. A method according to claim 1 or 2, characterized in that an X10CrNiTi 18 9, X10CrNiNb 18 9, X10CrNiTi 18 10 or X5CrNiNb 18 10 grade steel is used as the material for the connecting piece (3).

4. A method according to claim 1, 2 or 3, characterized in that the steel for the material of the connecting piece (3) has a recommended analysis of
| | |
|---|---|
| C | 0.06 max |
| Cr | 17.5 |
| Ni | 9.5 |
| Ti > | 5 x C |
| or Nb > | 10 x C |
the balance being iron and usual iron-accompanying substances.

## Revendications

1. Procédé pour relier des parties d'aiguille (1) à base d'acier moulé austénitique au manganèse, par exemple des coeurs de croisement ou des rails en acier au manganèse avec un rail (2) à base d'acier au carbone avec l'utilisation d'une pièce intermédiaire (3) à base d'un acier austénitique pauvre en carbone, dans lequel la pièce intermédiaire (3) est soudée d'abord avec le rail (2) ou le rail de raccordement par soudage en bout par étincelage, après quoi, une fois la pièce intermédiaire (3) mise à une longueur inférieure à 25 mm, la pièce intermédiaire (3) est soudée dans une deuxième opération de soudage avec la pièce à base d'acier moulé austénitique au manganèse ou le rail en acier au manganèse (1) par soudage en bout par étincelage et est refroidie à la suite de la deuxième opération de soudage à l'air au repos, caractérisé en ce qu'une pièce intermédiaire (3) à base d'un acier austénitique, à faible teneur en carbone, stabilisé au Nb et/ou au Ti, en particulier un acier Cr-Ni, est mise en place, la teneur en Nb de l'acier pour la pièce intermédiaire (3) étant choisie égale à au moins dix fois la teneur en carbone et la teneur en titane est égale à au moins cinq fois la teneur en C et en ce que, à la suite de la première soudure, on effectue un recuit de diffusion à une température comprise entre 350° et 1000°C pendant une durée de 2 à 5 heures, après quoi on refroidit à l'air au repos.

2. Procédé selon la revendication 1, caractérisé en ce que le traitement thermique est effectué pendant une durée de 3 heures à environ 850°C.

3. Procédé selon la revendication 1 ou 2, caractérisé en ce qu'on utilise comme matériau pour la pièce intermédiaire (3) un acier de la qualité X10CrNiTi 18 9, X10CrNiNb 18 9, X10CrNiTi 18 10 ou X5CrNiNb 18 10.

4. Procédé selon la revendication 1, 2 ou 3, caractérisé en ce que l'acier pour le matériau de la pièce intermédiaire (3) présente une analyse de référence
| | |
|---|---|
| C | 0,06 max. |
| Cr | 17,5 |
| Ni | 9,5 |
| Ti > | 5 x C |
| ou Nb > | 10 x C |
le reste étant du fer et des produits classiques accompagnant le fer.
